# EUROPEAN PATENT SPECIFICATION

(11) **EP 1 236 500 B1**
(45) Date of publication and mention of the grant of the patent: **16.11.2005**
(21) Application number: 01104731.3
(22) Date of filing: 26.02.2001
(51) Int. Cl.: B01D 63/08, B01D 63/16, B01D 65/00

(54) **Flat membrane disk**
Flachmembran-Scheibe
Disque à membranes planes

(43) Date of publication of application: 04.09.2002
(73) Proprietor: Hitachi Plant Engineering & Construction Co., Ltd., Tokyo (JP)
(72) Inventor: Oonishi, Makoto, Hitachi Plt Eng. & Con. Co., Ltd., Tokyo (JP); Ohkuma, Naoki, Hitachi Plt Eng. & Con. Co., Ltd., Tokyo (JP); Okuno, Yutaka, Hitachi Plt Eng. & Con. Co., Ltd., Tokyo (JP); Murai, Yukio, Hitachi Plant Eng. & Con. Co., Ltd., Tokyo (JP)
(74) Representative: Grünecker, Kinkeldey, Stockmair & Schwanhäusser Anwaltssozietät

(56) References cited:
- EP-A- 0 513 796
- PATENT ABSTRACTS OF JAPAN vol. 1998, no. 11, 30 September 1998 (1998-09-30) -& JP 10 174849 A (NITTO DENKO CORP), 30 June 1998 (1998-06-30) -& DATABASE WPI Section Ch, Week 199836 Derwent Publications Ltd., London, GB; Class D15, AN 1998-421406 XP002169275 & JP 10 174849 A (NITTO DENKO CORP), 30 June 1998 (1998-06-30)
- PATENT ABSTRACTS OF JAPAN vol. 1997, no. 07, 31 July 1997 (1997-07-31) & JP 09 057072 A (NITTO DENKO CORP), 4 March 1997 (1997-03-04)
- PATENT ABSTRACTS OF JAPAN vol. 1996, no. 10, 31 October 1996 (1996-10-31) & JP 08 155279 A (HITACHI PLANT ENG &CONSTR CO LTD), 18 June 1996 (1996-06-18)

## Description

The present invention relates to a flat membrane disk, particularly to a flat membrane disk for a rotary flat membrane separation apparatus which performs filtration intermittently.

A rotary flat membrane separation apparatus comprises a hollow rotary shaft and many flat membrane disks mounted on the shaft. The rotary flat membrane separation apparatus performs filtration by rotating the flat membrane disks while drawing water to be processed into them. In each of the flat membrane disks, a flat membrane is stretched at each of sides of a disk-shaped support body, which is so-called a disk, and the flat membranes and the disk are bonded to each other all around the outer periphery. The flat membrane disks are always rotated with the rotary shaft, whereby providing the flat membrane surfaces a flux so as to prevent the membrane surfaces from being clogged. Thus, the rotary flat membrane separation apparatus can perform filtration with a low power, which differs from other apparatuses that provides a flux to the membrane surface by circulating the water to be processed.

Such a flat membrane disk is already known from documents JP-A-10174849 and JP-A-9057072. These documents show a membrane disk filter having outer peripheral bondings to bond a membrane to a support.

An intermittent suction method in which the water to be processed is drawn and filtrated intermittently is applied to the rotary flat membrane separation apparatus, so that the filtration capacity of the flat membrane can be maintained. By this method, the suction of the water to be processed is temporarily stopped so as to lower the adhesion of the contamination onto the membrane surface while the flat membrane disks are continuously rotated so as to separate and eliminate the contamination layer from the membrane surface. Moreover, some of the filtrated water within the flat membrane disks is reversed through the flat membrane by the centrifugal force, so that reverse cleaning effect can be achieved.

However, the conventional rotary flat membrane separation apparatus had a problem in that the flat membrane is separated from the support body and swollen when the filtrated water is reversed. Because of the fact that the flat membrane is swollen over and over at every time the suction filtration is stopped, the flat membrane is stretched unduly and wrinkled, and consequently the flat membrane is broken.

The present invention has been developed in view of the above-described circumstances, and has as its object the provision of the flat membrane disk that can prevent the flat membrane from swelling.

This object is met by the features of claim 1.

According to the present invention, since the membrane is bonded to the support body by the additional bonding part in the area of the membrane nearer to the outer periphery of the membrane than the rotary shaft, the membrane is prevented from being separated and swollen. Therefore, wrinkles on the membrane are prevented and the breakage of the membrane can thus be prevented.

In the present invention, the additional bonding part is in a form of a line or a dot so that the area of the additional bonding part is small; thus, the filtration capability of the membrane is not deteriorated.

Moreover, in the present invention, the additional bonding part is arranged in an area where the fluid that has passed through the membrane to the inside of the flat membrane disk flows in a reverse direction through the membrane to the outside of the flat membrane disk; so that the swelling of the membrane can be effectively prevented.

The nature of this invention, as well as other objects and advantages thereof, will be explained in the following with reference to the accompanying drawings, in which like reference characters designate the same or similar parts throughout the figures and wherein:
Fig. 1 is a view showing an external appearance of a membrane module using a flat membrane disk in the present embodiment;
Fig. 2 is a side section view of the flat membrane disk in the present embodiment;
Fig. 3 is a section view along line 3-3 in Fig. 2;
Fig. 4 is an explanatory view of a reverse flow area;
Figs. 5(a) and 5(b) are views showing distributions of a passing flux with respect to a distance from the center of the disk;
Fig. 6 is a view showing filtration pressure through time;
Fig. 7 is a section view showing a flat membrane disk in another embodiment; and
Fig. 8 is a section view showing a flat membrane disk in still another embodiment.

Hereunder a preferred embodiment will be described in detail of the flat membrane disk of the present invention with the accompanied drawings.

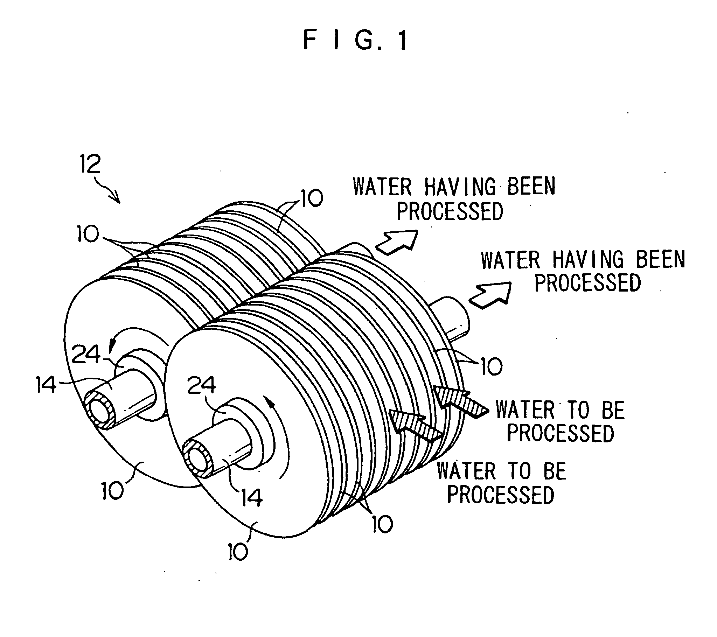

Fig. 1 is a view showing an external appearance of a membrane module 12 to which a flat membrane disk 10 of the present embodiment is applied.

As seen from Fig. 1, the membrane module 12 comprises a rotary shaft 14 and a plurality of flat membrane disks 10, which are arranged on the rotary shaft 14 at regular intervals. The membrane module 12 is immersed in raw water (water to be processed) which is held in a process tank (not shown) of a rotary flat membrane separation apparatus. The rotary shaft 14 is connected with a drive unit (not shown), and can rotate together with the flat membrane disks 10. The rotary shaft 14 communicates with the inside of the flat membrane disks 10 as well as a suction unit (not shown), so that suction force can be generated inside the flat membrane disks 10 by driving the suction unit.

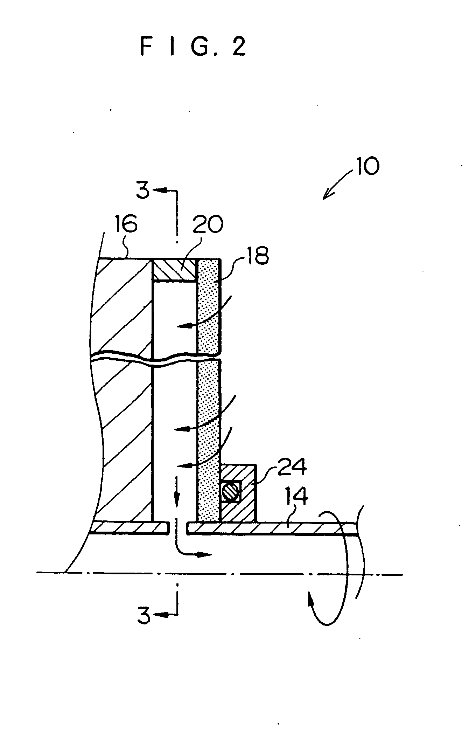

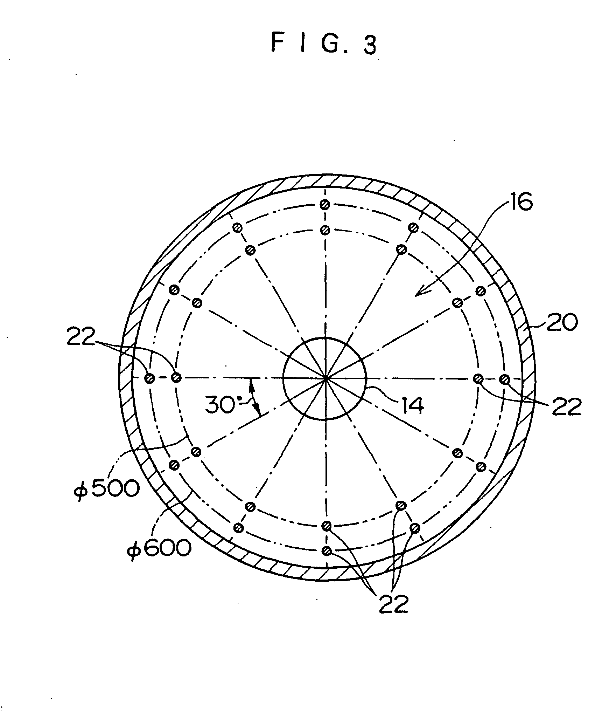

Fig. 2 is a section view of the flat membrane disk 10, and Fig. 3 is a section view along line 3-3 in Fig. 2.

As seen from Figs. 2 and 3, the flat membrane disk 10 comprises a circular disk 16 and circular flat membranes 18, each of which is attached to each of sides of the circular disk 16. The disk 16 and the flat membrane 18 are bonded all around the outer periphery, and the water that has been filtrated through the flat membrane 18 is not leaked to outside because of a bonding part 20 (hereunder called an outer periphery bonding part). Thus, as the suction force is generated inside the flat membrane disk 10 (between the disk 16 and the flat membrane 18), the raw water outside the flat membrane disk 10 is drawn into the inside of the flat membrane disk 10 through the flat membrane 18, and the filtrated water is transferred to the rotary shaft 14. A fluid sealing ring 24 prevents the filtrated water from being leaked around the rotary shaft 14.

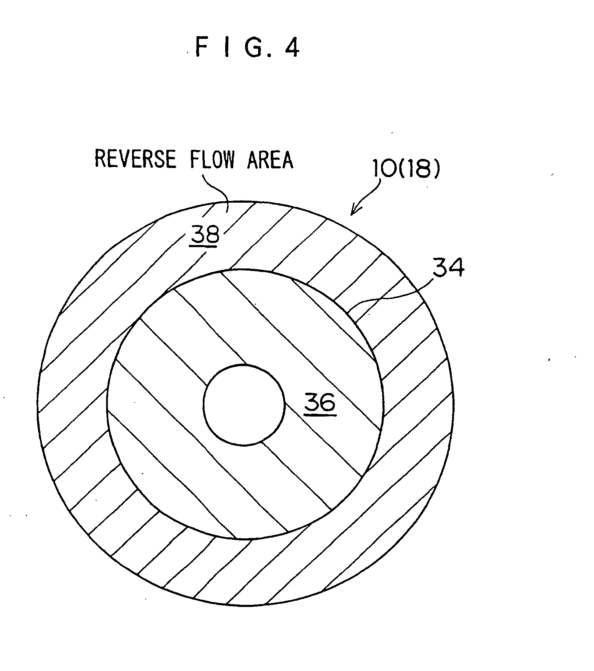

As also seen from Fig. 3, a plurality of partial bonding parts 22 are provided to the flat membrane disk 10 at the rotary shaft side rather than the outer periphery bonding part 20. Each of the partial bonding parts 22 securely bonds the flat membrane 18 and the disk 16 to each other in a small area. The partial bonding parts 22 are arranged in an area where the filtrated water flows in a reverse direction through the flat membrane 18 (the area is hereunder called a reverse flow area) at the time the suction-filtrating is stopped (that is, while the suction is stopped while continuing the rotation of the flat membrane disk 10). As seen from Fig. 4, the reverse flow area is normally formed outside a circular boundary 34 around the rotary shaft 14 of the flat membrane disk 10 when the flat membrane disk 10 is divided into two areally equal parts by the circular boundary 34. In other words, when the flat membrane disk 10 is divided so as to make the areas of a central part 36 and a peripheral part 38 equal, the peripheral part 38 is the reverse flow area. For example, if the diameter of the flat membrane disk 10 is 700mm and the width of the outer periphery bonding part 20 is 15mm, the reverse flow area is formed outside the boundary 34 of the diameter about 500mm. The partial bonding parts 22 are formed like dots with a diameter of 10mm, and are arranged at every 30 degrees on circles of the diameters 500mm and 600mm. Thereby, the partial bonding parts 22 are uniformly arranged in the reverse flow area.

Next, an operation of the flat membrane disk 10 which is constructed as described above will be explained.

The membrane module 12 draws the raw water from the outside of the flat membrane disk 10 into the inside of the flat membrane disk 10 through the flat membrane 18 to filtrate the raw water by effecting the suction force inside the flat membrane disk 10. At that time, a contamination layer that cannot be eliminated despite rotating the flat membrane disk 10 gradually accumulates on the surface of the flat membrane 18. In order to eliminate such accumulation, the suction is temporally stopped after the suction-filtrating have been performed for a certain period of time, so as to decrease the suction pressure and adhesion of the contamination layer to the flat membrane 18, and at the same time the flat membrane disk 10 is continuously rotated to eliminate the contamination layer from the flat membrane 18. At that time, some of the filtrated water inside the flat membrane disk 10 flows in a reverse direction to the outside through the flat membrane 18.

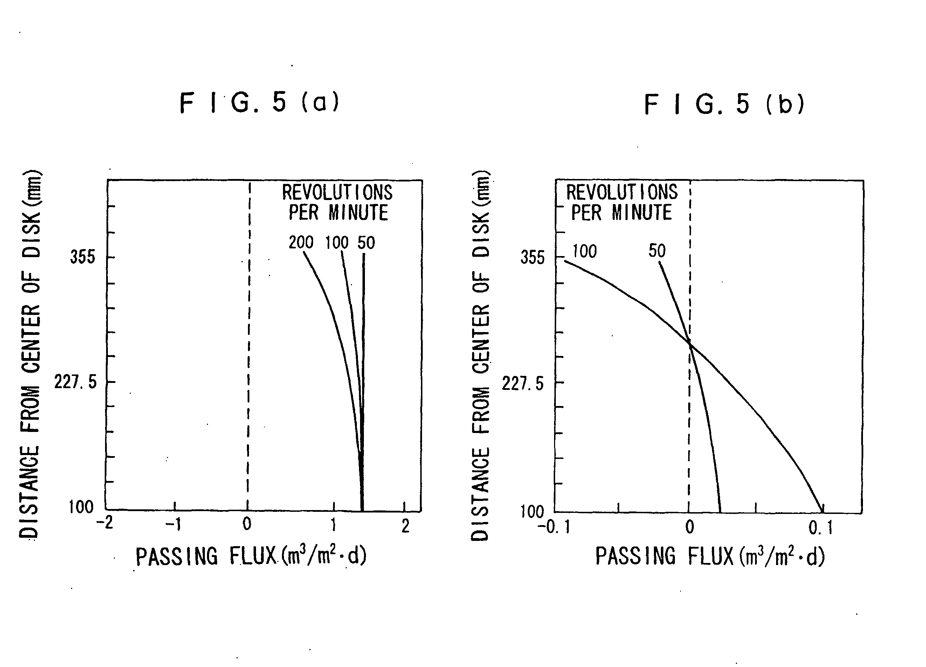

Figs. 5(a) and 5(b) show distribution of the flux passing through the flat membrane 18 of the flat membrane disk 10 with a diameter of 700mm. Fig. 5(a) shows the distribution during the filtration, and Fig. 5(b) shows the distribution during suspension of the filtration. The direction of the flow from the outside to the inside of the flat membrane disk 10 is the positive direction.

As seen from Fig. 5(a), the passing flux is lowered from the center (i.e. the rotary shaft) to the extremity of the flat membrane disk 10 during the filtration. This is because the centrifugal force is applied to the filtrated water inside the flat membrane disk 10, and the filtrated water tends to flow in reverse so that the passing flux is difficult to obtain at the extremity of the flat membrane disk 10. However, the passing flux during the filtration receives almost no effect of the centrifugal force when the flat membrane disk 10 is normally rotated at 50rpm, and the positive passing flux is always obtained even with the high-speed rotation at 200rpm, and the reverse flow does not occur.

At the time of the filtration being stopped, on the other hand, as seen from Fig. 5(b), the passing flux gradually decreases from the rotary shaft side to the extremity side, and the direction of the passing flux is reversed at a position about 250mm from the center. In other words, the passing flux in the positive direction is always obtained in an area at the rotary shaft side outside a circle of 250mm in radius around the center, and the area outside the 250mm position is the reverse flow area where a flow in a direction that is reverse to the direction at the filtration is formed. Therefore, in a conventional flat membrane disk, the flat membrane is swollen out in the reverse area at every time the filtration is stopped, and the flat membrane might be wrinkled and broken.

In contrast, in the flat membrane disk 10 of the present embodiment, the flat membrane 18 is partially bonded to the disk 16 in the reverse flow area, and the flat membrane 18 is thereby prevented from swelling even though the reverse flow occurs. With regard to this swelling prevention effect of the flat membrane 18, the swelling of the flat membrane 18 can be decreased by about 40% in a simulation of the swelling of the flat membrane 18.

As described above, in the flat membrane disk 10 in the present embodiment, the flat membrane 18 is partially bonded to the disk 16 in the reverse flow area, so that the swelling of the flat membrane 18 can be prevented. Thus, wrinkles on the flat membrane 18 can be prevented and the life of the flat membrane 18 is improved.

In the flat membrane disk 10 in the present embodiment, the area of the bonding parts 22 is small since the bonding parts 22 are formed like dots; hence the filtration capacity of the flat membrane 18 of the flat membrane disk 10 is scarcely decreased. Thus, the swelling of the flat membrane 18 can be prevented without decreasing the filtration capacity of the flat membrane disk 10.

Moreover, in the flat membrane disk 10 in the present embodiment, the flat membrane 18 has increased number of binding points by providing the bonding parts 22 between the flat membrane 18 and the disk 16; hence the apparatus can operate with a larger rotational speed of the flat membrane disk 10. More specifically, in a case where a conventional apparatus is operated at 40-60 rpm, the apparatus in the present embodiment can be operated at 80-100 rpm. Thereby, a large flux can be provided to the surface of the flat membrane 18, and the formation of the contamination layer on the flat membrane 18 can be effectively prevented. Thus, number of times for cleaning with cleaning solution can be decreased.

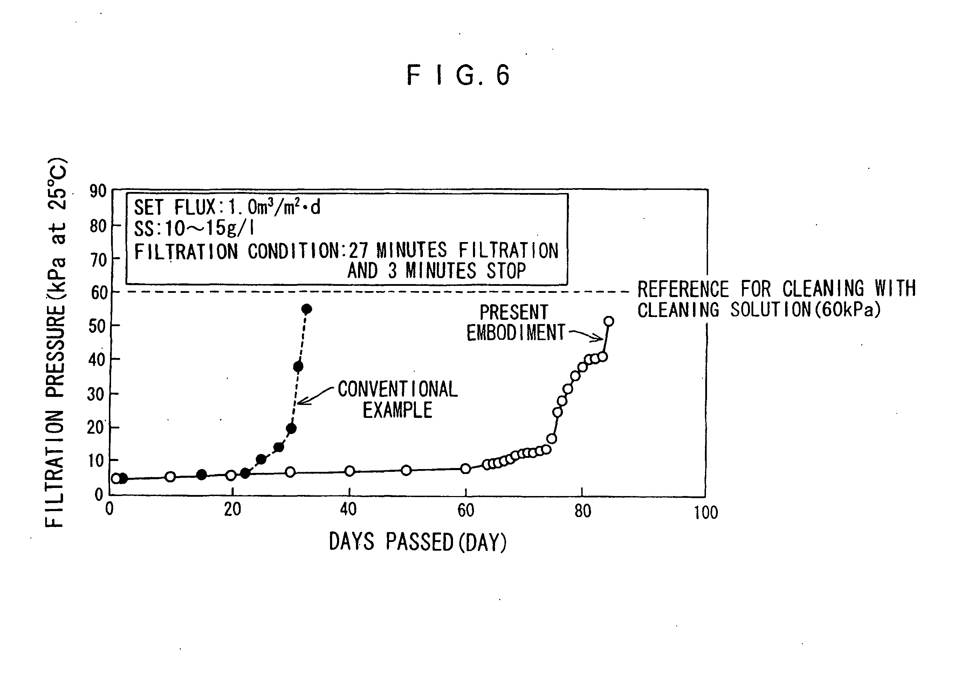

Fig. 6 shows a change of the filtration pressure of the flat membrane disk 10 through time, in which 27 minutes of filtration and 3 minutes suspension of the filtration are repeated under the condition that the set flux is 1.0m³/m²·day and Suspended Solids (SS) is 10-15g/l. In a conventional example, of which data is indicated with a broken line in Fig. 6, the flat membranes 18 and the disk 16 have the same sizes as those of the present embodiment, and they are bonded to each other only at the outer periphery bonding part 20. The present embodiment shows the data where the flat membrane disk 10 is rotated at 80rpm, whereas the conventional example shows the data where the flat membrane disk is rotated at 60rpm.

As seen from Fig. 6, in the conventional example, the filtration pressure is dramatically risen after 20 days, and cleaning with cleaning solution is required about every 30 days; in contrast, the present embodiment can be continuously operated for about 90 days without cleaning.

Since the flat membrane disk in the conventional example has less number of binding points in the flat membrane 18 than that of the present embodiment, the flat membrane disk 10 can only be operated at 60rpm. Because of that, the flux effecting on the surface of the flat membrane 18 is small, and the contamination layer cannot be effectively eliminated from the flat membrane 18. On the other hand, the flat membrane disk 10 of the present embodiment is provided with the partial bonding parts 22 and has more binding points on the flat membrane 18; hence, the flat disk 10 can be operated at 80rpm, which is a high speed operation, and can effectively prevent adhesion of the contamination layer to the flat membrane 18.

According to the flat membrane disk 10 in the present embodiment, because the flat membrane disk 10 can be rotated at a higher rate than the conventional disk, the filtration capacity of the flat membrane 18 can be improved, and the necessity for cleaning the flat membrane 18 with the cleaning solution can be decreased.

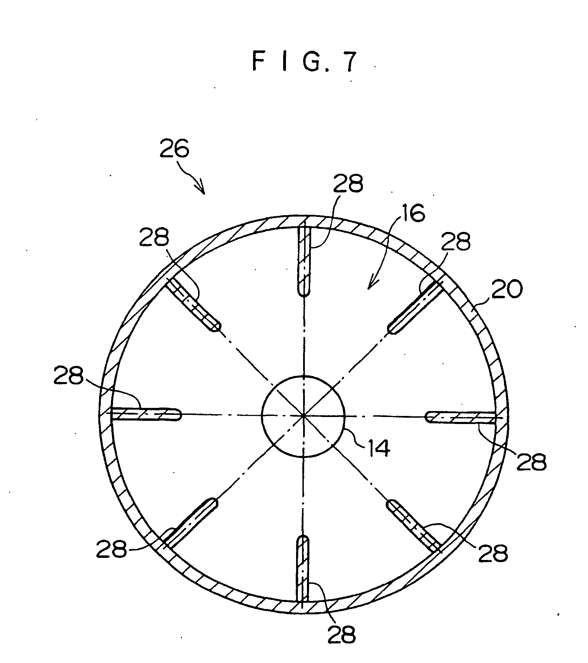

In the above-described embodiment, the partial bonding parts 22 in dot shape are provided at every 30 degree on the circles of the diameters 500mm and 600mm; however, shapes and number of the partial bonding parts 22 are not restricted to the ones mentioned in the present embodiment. For example, each of partial bonding parts 28 of a flat membrane disk 26 in Fig. 7 is formed like a line, and is arranged in a direction of the diameter of the flat membrane disk 26. In such a case, the flat membrane 18 and the disk 16 are even more tightly bonded, and the swelling of the flat membrane 18 can be completely prevented.

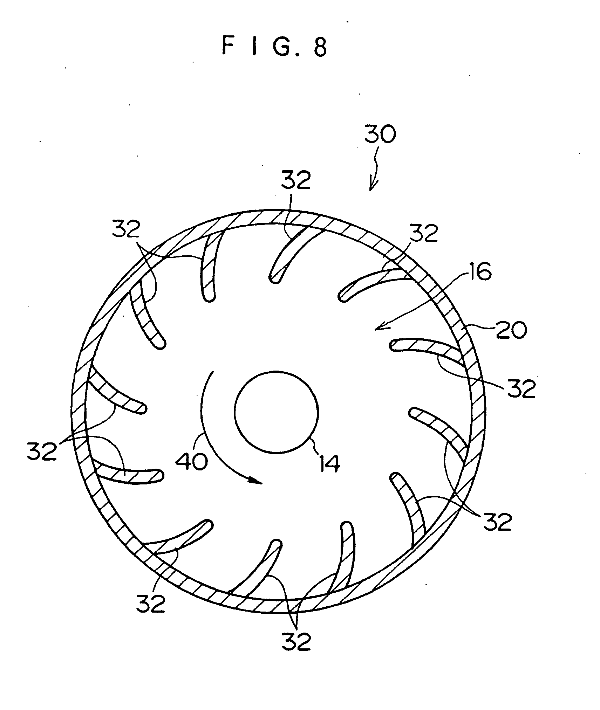

Moreover, in a flat membrane disk 30 in Fig. 8, each of partial bonding parts 32 is arranged along a line of flow formed by the liquid inside the flat membrane disk 30 during the suspension of the filtration. In other words, the partial bonding parts 32 are inclined toward the rear side of a rotational direction 40 as they become closer to the outer periphery. Thus, the liquid inside the flat disk 30 flows along the partial bonding parts 32 during the suspension of the filtration, and the partial bonding parts 32 do not disturb the flow. Thus, the partial bonding parts 32 can be prevented from disturbing the rotation of the flat membrane disk 30, and the flat disk 30 can be operated at a high rate.

Form of the partial bonding part 22 can be a broken line, and the partial bonding parts 22 may be arranged as shown in Figs. 7 and 8 so that the flat membrane 18 and the disk 16 can even more tightly bonded without increasing the area of the bonding parts 22.

The partial bonding parts 22 in the above-described embodiment are arranged in the reverse flow area, but the area to arrange them is not limited only to that.

The flat membrane 18 in the above-described embodiment is directly adhered to the disk 16; however, the adhesion can be through unwoven cloth and the like. The disk 16 may be constructed of a member permeable by water, so that liquid can go through the disk 16.

As described above, according to the flat membrane disk of the present invention, the flat membrane is partially bonded to the support body so as to prevent the flat membrane from separating from the support body and swelling; therefore, wrinkles on the flat membrane can be prevented from forming, and the breakage of the flat membrane can be prevented.

## Claims

1. A flat membrane disk (10) for a rotary flat membrane separation apparatus (12), the disk (10) comprising:
a circular support body (16) connectable to a rotary shaft (14); and
a circular flat membrane (18) stretched at a side of the support body (16) by bonding the membrane (18) to the support body (16) at an outer periphery of the membrane (18) by a peripheral bonding part (20),
**characterized in that**
the membrane (18) is partially bonded to the support body (16) with a plurality of additional bonding parts (22, 28, 32) in a reverse flow area, where the liquid flows in reverse direction through the flat membrane (18) at a time the suction-filtration is stopped, said reverse flow area being arranged in a peripheral part when the membrane (18) is divided into a circular central part and the peripheral part surrounding the central part.

2. The flat membrane disk (10) as set forth in claim 1, wherein each additional bonding part (28) is formed like a line extending radially.

3. The flat membrane disk (10) as set forth in claim 2, wherein the additional bonding parts (32) are inclined towards the outer periphery of said membrane (18) in a direction opposite to the rotational direction of said disk.

## Patentansprüche

1. Flachmembranscheibe (10) für eine Dreh-Flachmembran-Abscheidevorrichtung (12), wobei die Scheibe (10) umfasst:
einen kreisförmigen Tragekörper (16), der mit einer Drehwelle (14) verbunden werden kann; und
eine kreisförmige Flachmembran (18), die an einer Seite des Tragekörpers (16) ausgedehnt wird, indem die Membran (18) an einem Außenumfang der Membran (18) durch einen Umfangs-Verbindungsteil (20) mit dem Tragekörper (16) verbunden wird,
**dadurch gekennzeichnet, dass**:
die Membran (18) mit einer Vielzahl zusätzlicher Verbindungsteile (22, 28, 32) mit dem Tragekörper (16) in einem Rückstrombereich teilweise verbunden ist, in dem die Flüssigkeit in Rückwärtsrichtung durch die Flachmembran (18) strömt, wenn die Ansaugfiltrierung unterbrochen wird, wobei der Rückstrombereich in einem Umfangsteil angeordnet ist, wenn die Membrane (18) in einen kreisförmigen Mittelteil und den Umfangsteil unterteilt wird, der den Mittelteil umgibt.

2. Flachmembranscheibe (10) nach Anspruch 1, wobei jedes zusätzliche Verbindungsteil (28) wie eine Linie ausgebildet ist, die radial verläuft.

3. Flachmembranscheibe (10) nach Anspruch 2, wobei die zusätzlichen Verbindungsteile (32) in einer Richtung entgegengesetzt zu der Drehrichtung der Scheibe zum Außenumfang der Membrane (18) hin geneigt sind.

## Revendications

1. Disque à membranes planes (10) pour un appareil de séparation à membranes planes rotatif (12), le disque (10) comprenant :
un corps de support circulaire (16) pouvant être connecté à un arbre rotatif (14) ; et
une membrane plane circulaire (18) étirée au niveau d'un côté du corps de support (16) en collant la membrane (18) au corps de support (16) au niveau d'une périphérie extérieure de la membrane (18) par une pièce de collage périphérique (20).
**caractérisé en ce que**
la membrane (18) est partiellement collée au corps de support (16) avec une pluralité de pièces de collage supplémentaires (22, 28, 32) dans une zone d'écoulement inversé, où le liquide s'écoule dans la direction inverse à travers la membrane plane (18) à un moment où l'aspiration filtration est arrêtée, ladite zone d'écoulement inversé étant agencée dans une parie périphérique lorsque la membrane (18) est divisée en une partie centrale circulaire et la partie périphérique entourant la partie centrale.

2. Disque à membranes planes (10) selon la revendication 1, dans lequel chaque pièce de collage supplémentaire (28) est formée comme une ligne s'étendant radialement.

3. Disque à membranes planes (10) selon la revendication 1, dans lequel les pièces de collage supplémentaires (32) sont inclinées vers la périphérie extérieure de ladite membrane (18) dans une direction opposée à la direction de rotation dudit disque.
